# EUROPEAN PATENT APPLICATION

(11) **EP 1 736 403 A1**
(43) Date of publication of application: **27.12.2006**
(21) Application number: 05425454.5
(22) Date of filing: 23.06.2005
(51) Int. Cl.: B62M 3/00, B62K 19/34

(54) **Attachment group of a pedal crank to the central axle of a bottom bracket of a bicycle transmission**

(71) Applicant: Campagnolo Srl, 36100 Vicenza (VI) (IT)
(72) Inventor: Meggiolan, Mario, 36051 Creazzo (Vicenza) (IT)
(74) Representative: Checcacci, Giorgio

(57) **Abstract**

The attachment group (8; 78) of a pedal crank (1; 1') to the central axle (4; 4'; 74) of the bottom bracket of a bicycle transmission, in which the axle (4; 4'; 74) defines an axial direction along its own rotation axis (X) and on it a first way (X₁) towards the centre of the axle (4; 4'; 74) and a second way (X₂) opposite the first (X₁), comprises a tension element (14; 84) in screwing engagement with the axle (4; 4'; 74) and in axial resting engagement with the pedal crank (1; 1'). The tension element (14; 84) comprises a first axial abutment surface (23; 123; 223; 323; 93), facing the first way (X₁) in the axial direction (X), for resting against a corresponding axial abutment surface (13) of the pedal crank (1; 1'), facing the second way (X₂) in the axial direction (X). The tension element (14; 84) further comprises a second axial abutment surface (24; 124; 224; 324; 94), facing the first way (X₁) in the axial direction (X), for resting against a corresponding axial abutment surface (9; 79) of the axle (4; 4'; 74), facing the second way (X₂) in the axial direction (X), and a third axial abutment surface (25; 425; 95), facing the second way (X₂) in the axial direction (X), for resting against a clamping element (26) which is in screwing engagement with the pedal crank (1; 1').

The resting between the first axial abutment surface (23; 123; 223; 323; 93) of the tension element (14; 84) and the axial abutment surface (13) of the pedal crank (1; 1') ensures the precision of the axial position of the tension element (14; 84) with respect to the pedal crank (1; 1'), whereas the resting between the second axial abutment surface (24; 124; 224; 324; 94) of the tension element (14; 84) and the axial abutment surface (9; 79) of the axle (4; 4'; 74) ensures the precision of the axial position of the tension element (14; 84) with respect to the central axle (4; 4'; 74); the stability of the attachment is ensured by the clamping element (26).

## Description

The present invention is relative to the attachment of a pedal crank to the central axle of a bottom bracket of a bicycle transmission, and specifically concerns an attachment group, as well as a pedal crank and a central axle intended to cooperate with such an attachment group.

In relation to a central axle and a pedal crank of a bicycle transmission, by "coupling" the mutual mechanical interaction is meant between axle and pedal crank that makes the two elements integral in rotation about the axis of the bottom bracket, allowing the transmission of torque or rather of power between the pedal crank and the axle. In the same context, on the other hand, "attachment" indicates the mutual mechanical interaction that makes the two elements integral in translation in the direction of the axis of the bottom bracket, preventing the pedal crank from slipping off, thus ending the coupling.

The coupling between the ends of the central axle and a pedal crank (right or left) of the bicycle is obtained normally through insertion of the aforementioned ends, projecting outside of the frame, in suitable receiving seats made at the ends of the elongated body of which each of the two pedal cranks of the bicycle consists.

The axle-pedal crank coupling must ensure high mechanical strength since during pedalling it is subjected to high and discontinuous stresses, in traction, in bending and in twisting. For such a purpose, generally the coupling provides a coupling profile with particular geometric shapes (polygonal or with grooved profiles), so as to make a shape coupling such as to make the pedal crank integral in rotation with the central axle.

In the present patent text by "coupling profile" we mean the ideal outline that separates the body of the central axle from the body of a pedal crank coupled with it. Normally, such a line defines both the outer profile of the axle, and the inner profile of the receiving seat of the axle in the pedal crank, apart from the working tolerances.

For the attachment of the pedal crank to the axle, normally the coupling profile is made slightly tapered in the axial direction, with sizes that increase away from the end of the central axle, and a particularly simple attachment system provides a tension element (in the form of a screw) screwed onto the axle and clamped so as to push on the pedal crank forcing it against the axle until it is locked. With this system a stable and strong attachment is certainly obtained, however the final position of the pedal crank in the direction of the axis of the central axle remains not precisely defined, since this depends upon the clamping force applied to the tension element and upon the deformability of the material of the axle and pedal crank.

A good axle-pedal crank attachment must ensure, as well as the necessary high mechanical strength, a correct alignment of the right and left pedal cranks with respect to the plane passing through the centre of the bottom bracket.

In relation to such positioning, in a bicycle transmission precise parameters are defined, like for example the Q factor and the I factor, which force manufacturers to suitably size the bottom bracket, the pedal cranks and their coupling and attachment so as to allow the parameters themselves to be respected. The Q factor is defined as the distance between the centre of the bottom bracket and the outer surface of the pedal crank in the attachment zone to the pedal. The I factor is defined as the distance between the centre of the bottom bracket and the inner surface of the pedal crank, i.e. the one facing towards the frame, in the attachment zone to the pedal.

Another relevant parameter is the so-called "chainline", which refers to the position of the crowns (single, double or triple) associated with the right pedal crank with respect to the centre of the bottom bracket. The position of the crowns determines the positioning of the chain during normal pedalling and influences the gearshifting operations. Even very small alignment errors can determine difficulties in the operation of the gearshift, and even prevent the operation of most sophisticated gearshifts.

In order to avoid these alignment problems, a standard has been proposed (see "ISIS Drive - The International Spline Interface Standard, ISIS Drive Standard Committee, 2001), which provides for a grooved coupling profile with a definite shape and precise size values for ribs and grooves.

In particular, according to such a standard, the axle has on its outer surface ten ribs equally angularly spaced apart that extend longitudinally along the axis of the axle, such ribs consisting of crest zones joined by as many depressions having, in section, a circular profile. Correspondingly, the pedal crank has a receiving seat with a profile substantially of a shape matching the outer profile of the axle and therefore has ten equally angularly spaced grooves that extend longitudinally along the axis of the hole; such grooves consist of corresponding base zones joined by as many protrusions projecting towards the axis of the hole, such protrusions having a substantially circular profile in section.

The axle and the hole of the pedal crank have a slightly tapered progression (1° inclination with respect to the axis) to have a certain mechanical interference between pedal crank and axle once assembly is complete. To ensure the positioning of the pedal crank in the axial direction, a specific shoulder is provided against which the pedal crank is pushed axially by the flanged head of an attachment screw, screwed into a threaded axial hole provided in the central axle.

Resting against the shoulder ensures the desired positioning in the axial direction, however it imposes strict processing tolerances to avoid the forced coupling between pedal crank and axle being made uncertain or worse with play, seriously jeopardising the quality of the coupling itself. In any case, the magnitude of the forcing between pedal crank and axle is little controllable, being dependent upon the processing tolerances.

FR 2587965 describes a axle-pedal crank attachment system in which, in addition to the conventional screw or tension element in screwing engagement with the axle, a ring nut is provided, screwed onto the pedal crank, and a frusto-conical elastic pincer, inserted between pedal crank and axle. The ring nut screwed onto the pedal crank provides an adjustable abutment for the screw on the pedal crank and receives the pincer in abutment, thus determining the relative position between axle and pedal crank. A modification of such a position is possible by screwing in or unscrewing the ring nut.

In this embodiment, the precision of axial positioning is very uncertain, in any case being linked to the clamping force with which the frusto-conical pincer is deformed. Moreover, according to the position of the ring nut, the surfaces of the axle and of the pedal crank in contact with the pincer change in extension, thus making it very difficult if not totally impossible to precisely foresee the distribution of stresses and deformations in the material of the various elements.

Finally, the transmission of torque between axle and pedal crank is not optimal since the interposition of the elastic pincer inevitably introduces a certain play; this phenomenon is accentuated by the fact that, with respect to the coupling between elastic pincer and pedal crank, the tension of the locking screw is such as to push the pedal crank in a direction of disengagement with respect to the elastic pincer.

There thus exists the problem of improving the attachment of the pedal crank on the central axle, so as to ensure more accurate positioning in the axial direction.

In its most general terms, therefore, the present invention concerns in a first aspect thereof an attachment group according to what is defined by claim 1, and in further aspects thereof a pedal crank and a axle according to what is defined by claims 13 and 15. Preferred characteristics are indicated in the dependent claims.

In particular, in its first aspect the invention concerns an attachment group of a pedal crank to the central axle of the bottom bracket of a bicycle transmission, in which the axle defines an axial direction along its own rotation axis and on it a first way towards the centre of the axle and a second way opposite the first, comprising a tension element in screwing engagement with the axle and in axial resting engagement with the pedal crank, in which the tension element comprises a first axial abutment surface, facing the first way in the axial direction, for resting against a corresponding axial abutment surface of the pedal crank, facing the second way in the axial direction, characterised in that the tension element comprises a second axial abutment surface, facing the first way in the axial direction, for resting against a corresponding axial abutment surface of the axle, facing the second way in the axial direction, and a third axial abutment surface, facing the second way in the axial direction, for resting against a clamping element which is in screwing engagement with the pedal crank.

In this way, the resting between the first axial abutment surface of the tension element and the axial abutment surface of the pedal crank ensures the precision of the axial position of the tension element with respect to the pedal crank, whereas the resting between the second axial abutment surface of the tension element and the axial abutment surface of the axle ensures the precision of the axial position of the tension element with respect to the central axle, whereas the stability of the attachment is ensured by the clamping element.

Preferably, the tension element comprises a shoulder and a first abutment washer mounted against the shoulder, and in which at least one of the first and second abutment surface of the tension element is formed on the first abutment washer. The use of the abutment washer allows the contact conditions between the tension element and the pedal crank to be improved, leaving the freedom to use the most suitable material to ensure a stable attachment according to the materials with which both the tension element and the pedal crank are made. Moreover, the use of the washer allows a predetermined position in the axial direction of the second abutment surface of the tension element to be established with precision as well as for it to be modified with just as much precision by simply replacing the washer.

The first and second abutment surface of the tension element face the same first way in the axial direction; such surfaces can thus be coplanar to each other, or else one of them can be closer to the centre of the axle than the other. The coplanar condition appears to be the simplest one constructively; if a washer is used, it would be simply flat, while, if a washer is not used, the two first and second abutment surfaces could advantageously be formed with a single processing on the tension element. The non-coplanar condition, on the other hand, can allow particular coupling situations to be solved.

Preferably, the attachment group comprises a series of interchangeable first washers, having different thickness and/or shape, so as to immediately and easily have different assembly conditions of the pedal crank on the axle available, with different alignment parameters. It should be noted that the thickness of the washer per se is irrelevant for the mutual axial position of the axle and of the pedal crank, while it is relevant only for the axial position of the tension element with respect to both the axle and to the pedal crank; however, the axial position of the tension element is normally of little interest. What, on the other hand, is more relevant is the displacement in the axial direction between the two first and second abutment surfaces, i.e. the difference in thickness of the washer in its different parts to which such surfaces correspond.

The third abutment surface can be simply formed at the axial end of the tension element, facing the second way, or else, preferably, the tension element comprises a shoulder and possibly a second abutment washer mounted against the shoulder, and the third abutment surface is formed on the second abutment washer. Preferably the same shoulder can provide support in the two ways for the first and second washer. The advantages of the second washer are clearly analogous to those of the first washer, in particular it is advantageous to be able to select - for the second washer - a material with high friction in contact with the tension element and with the clamping element, to avoid in a simple manner that the clamping element loosens.

The tension element can have different configurations. In a preferred configuration, the tension element is a screw with external threading, in screwing engagement in a corresponding internal threading of the axle; alternatively, the tension element is a ring nut with internal threading, in screwing engagement in a corresponding external threading of the axle.

The clamping element can have various configurations. Preferably, the clamping element comprises a ring nut, having an external threading in screwing engagement in a corresponding internal threading in a receiving seat of the axle formed in the pedal crank, and an axial abutment surface facing in the first way, in resting engagement against the third axial abutment surface of the tension element. Such an attachment element is particularly effective, whilst still being both constructively simple and easy to actuate.

In its second aspect, the invention concerns a pedal crank for the assembly to a central axle of the bottom bracket of a bicycle transmission by means of an attachment group according to the first aspect of the invention, in which the pedal crank is provided with a receiving seat having a first portion and a second portion, the first portion being shaped according to a rotation coupling profile with the axle, the second portion being provided with an internal threading in which the clamping element of the attachment group is in screwing engagement, and in which the abutment surface of the pedal crank is formed in the receiving seat at a width variation between the two first and second portions of the receiving seat.

Preferably, at least the zone of the pedal crank in which the receiving seat is formed is made from aluminium alloy. The rest of the pedal crank can both be made from the same material, and be made from composite materials, such as structural fibres incorporated in a matrix of polymeric material, for example carbon fibre in thermosetting resin.

In its third aspect, the invention concerns a central axle of the bottom bracket of a bicycle transmission intended for the assembly of two pedal cranks, each by means of an attachment group according to the first aspect of the invention, in which the abutment surface of the axle is formed at an axial end of the axle.

In an alternative embodiment, the central axle comprises, close to each of its two ends, a first inner portion and a second outer portion, the first portion being shaped according to a rotation coupling profile with the pedal crank, the second portion being provided with an external threading in which the tension element of the attachment group is in screwing engagement, and in which the abutment surface of the axle is formed at a width variation between the two first and second portions of the axle.

Preferably, the axle is made from steel.

Further characteristics and advantages of the invention shall become clearer from the following description of preferred embodiments thereof, made with reference to the attached drawings. In such drawings:
- figure 1 is an exploded axonometric view of a pedal crank-central axle assembly with an attachment group according to a first embodiment of the invention;
- figure 2 is an axial section view of the assembly of figure 1;
- figure 3 is an enlarged section view of a detail of figure 2;
- figures 4 and 5 are views analogous to figure 3, which show abutment washers different to the one of figure 3;
- figures 6 and 7 are views analogous to figure 3, which show variants without one or other of the abutment washers;
- figures 8 and 9 are views analogous to figure 1, which show pedal crank-central axle assemblies according to different embodiments of the invention;
- figure 10 is an axial section view of the assembly of figure 9.

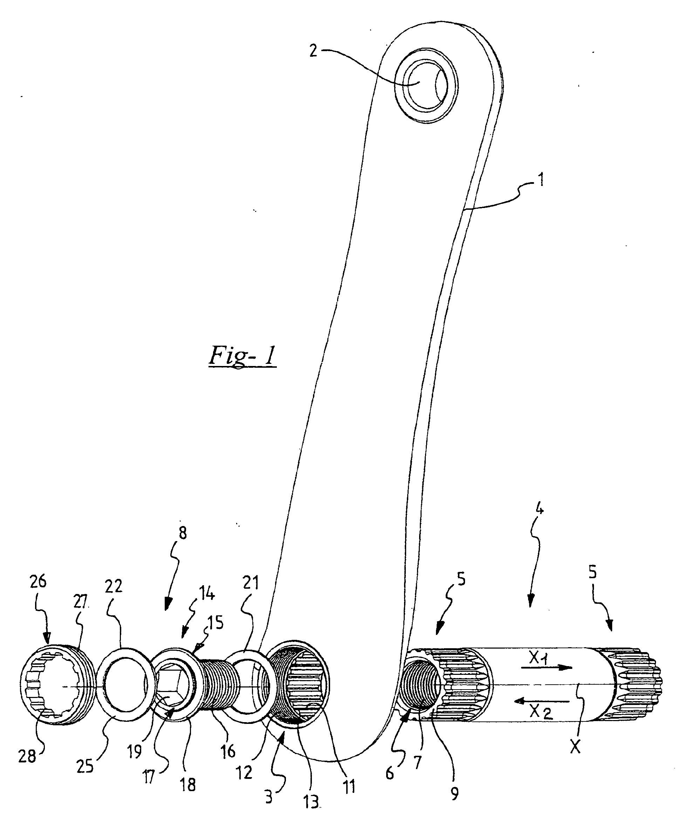

In figure 1 a axle-pedal crank assembly with a left pedal crank 1 is shown comprising an elongated body having a hole 2 at one end for the attachment of the pedal (not shown) and a seat 3 for receiving a central axle 4 at the other end. The central axle 4 belongs to the bottom bracket of a bicycle transmission, which in turn is mounted in a suitable hole formed in the bicycle frame. The axis X of the bottom bracket is shown in figure 1, said axis in general defining the direction that in the present patent text is known as the axial direction. In the present patent text, furthermore, the way towards the centre of the axle 4 and the opposite way are respectively called first and second way X₁ and X₂ in the direction X, with reference to the pedal crank 1.

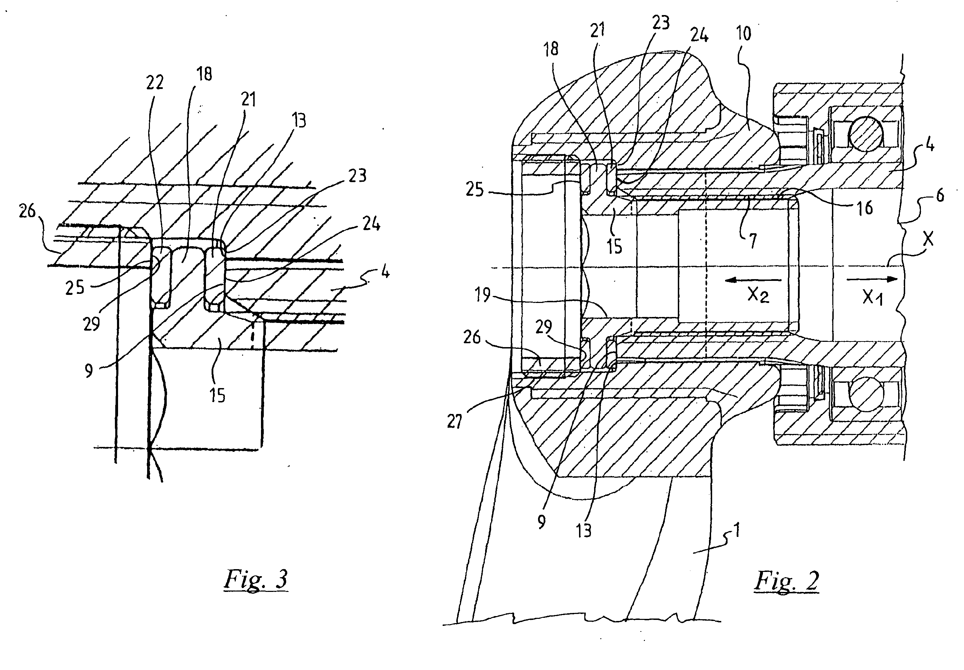

The pedal crank 1 is made from composite materials (such as structural fibres incorporated in a matrix of polymeric material, for example carbon fibre in thermosetting resin) and the seat 3 is formed on an insert 10 associated with the body of the pedal crank 1, for example a metal insert (preferably in aluminium alloy) or also made from composite material, incorporated in the body of the pedal crank 1, as can be seen more clearly in figure 2. In a variant embodiment, the seat can be formed directly in the material that constitutes the pedal crank itself, above all in the case in which the pedal crank is made entirely from metal.

The central axle 4 is substantially tubular hollow-shaped and close to its ends comprises respective coupling portions 5 with the left pedal crank 1 and with the right pedal crank (the latter not shown).

At each coupling portion 5 of the central axle 4, a central hole 6 is provided with an internal threading 7 for the screwing engagement with an attachment group 8 of the pedal crank 1 to the central axle 4. At the outer end of the coupling portion 5 of the axle 4 an axial abutment surface 9 of the axle 4, thus facing the second way X₂, is formed.

The seat 3 of the pedal crank 1 comprises a first coupling portion 11 with the coupling portion 5 of the central axle 4 and a second portion 12 provided with an internal threading, adjacent to the first coupling portion 11 and greater in size than it. Between the two portions 11 and 12 an annular abutment surface 13 is defined, facing axially the second way X₂.

The coupling portion 5 of the axle 4 and the coupling portion 11 of the pedal crank 1 are designed so that it is possible to transmit a twisting momentum between pedal crank 1 and axle 4; for example, such portions are designed according to a grooved coupling profile like the one provided by the quoted ISIS Drive standard or else according to a profile in accordance with European patent application no. 05425377.8 or else with European patent application no. 05425376.0, both of the same Applicant.

The attachment group 8 comprises a tension element 14, formed of a screw 15 with a threaded shank 16 and a head 17. The head 17 of the screw 15 is provided with a shoulder 18, extending circumferentially and projecting radially from the head 17, and with a hexagonal front notch 19 for engagement with a manoeuvring tool (not shown).

The tension element 14 also comprises a first abutment washer 21, mounted on the screw 15, axially close to the shoulder 18 on the side of the first way X₁, and a second abutment washer 22, mounted on the screw 15, axially close to the shoulder 18 on the side of the second way X₂. On the first abutment washer 21, at the opposite side with respect to the shoulder 18, a first abutment surface 23 and a second abutment surface 24 are formed, coplanar and both facing axially the first way X₁. On the second abutment washer 22, at the opposite side with respect to the shoulder 18, a third abutment surface 25 is formed, facing axially the second way X₂.

The attachment group 8 also comprises a clamping element, formed from a ring nut 26 with an external threading 27 and an inner grooved manoeuvring profile 28. On the ring nut 26, at its end facing the first way X₁, an axial abutment surface 29 is formed.

In figures 2 and 3, the conditions of pedal crank 1 mounted on the axle 4 are shown.

In such conditions, the internal threading 7 of the coupling portion 5 of the central axle 4 is in screwing engagement with the threaded shank 16 of the screw 15, just as the external threading 27 of the ring nut 26 is in screwing engagement in the threaded portion 12 of the receiving seat 3 of the pedal crank 1. Both the head 17 of the screw 15 and the ring nut 26 are arranged completely inside the second portion 12, as can be seen in figure 2; possibly, a cover can be provided to close such a portion (not shown in the figures). The first abutment surface 23 is in abutment engagement against the corresponding axial abutment surface 13 of the pedal crank 1; the second abutment surface 24 is in abutment engagement against the corresponding axial abutment surface 9 of the axle 4; the third abutment surface 25 is in abutment engagement against the corresponding abutment surface 29 of the ring nut 26.

The axle 4 is coupled in rotation with the pedal crank 1 through the mutual engagement of the coupling portion 5 of the axle 4 and the coupling portion 11 of the pedal crank 1. In such portions, between axle 4 and pedal crank 1 there is mechanical interference, nevertheless of sufficiently limited magnitude to allow the abutment surface 9 of the axle 4 to rest in the axial direction against the second abutment surface 24 of the tension element 14, when the same tension element 14 is arranged axially with the first abutment surface 23 rested against the abutment surface 13 of the pedal crank 1.

Therefore, the mutual axial position of the pedal crank 1 and of the axle 4 is defined precisely by the position along the axis X of the abutment surface 9 of the axle 4 and of the abutment surface 13 of the pedal crank 1. More precisely, given that the two first and second abutment surfaces 23 and 24 of the tension element 14 are coplanar, the axle 4 is positioned axially with respect to the pedal crank 1 with the abutment surface 9 of the axle 4 coplanar to the abutment surface 13 of the pedal crank 1.

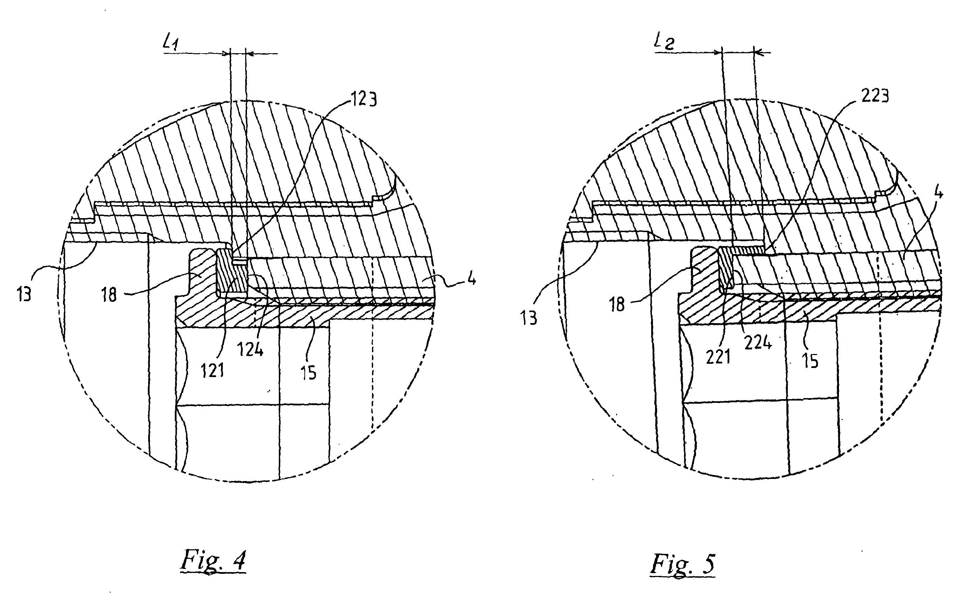

Figures 4 and 5 show two first abutment washers 121 and 221 different from the first washer 21. The other elements of the pedal crank-central axle assembly shown in figures 4 and 5 are the same as those shown in figure 3 and therefore shall not be described here; their reference numerals in the figures are the same as those of the assembly shown in figure 3.

The first abutment washer 121 of figure 4 is shaped so as to have a first abutment surface 123 not coplanar with the second abutment surface 124; in particular, the first abutment surface 123 is further from the centre of the axle 4, i.e. it is more displaced in the second way X₂ with respect to the second abutment surface 124. Consequently, the thickness of the washer 121 at the two abutment surfaces 123 and 124 differs by a value L₁.

In a reciprocal way, the first abutment washer 221 of figure 5 is shaped so as to have a first abutment surface 223 not coplanar with the second abutment surface 224; in particular, the first abutment surface 223 is closer to the centre of the axle 4, i.e. it is more displaced in the first way X₁ with respect to the second abutment surface 224. Consequently, the thickness of the washer 221 at the two abutment surfaces 223 and 224 differs by a value L₂.

Thanks to the selective use of abutment washers 21, 121 or 221, with a plurality of predetermined values L₁ and L₂, it is possible to easily and accurately obtain different axial positioning of the pedal crank 1 with respect to the axle 4, and thus different Q and I factors.

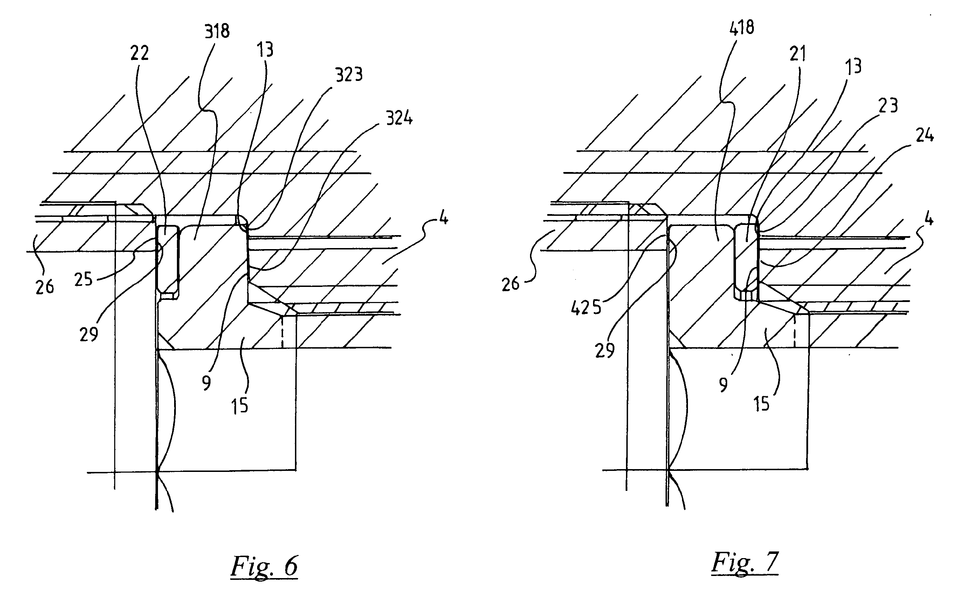

It should be noted that the first washer 21 (or 121 or 221) can be left out, as shown in the embodiment of figure 6. In such a case, the first and second abutment surfaces 323 and 324 of the tension element 14 are formed directly on the shoulder 318

Equally, the second washer 22 (or 122 or 222) can be left our, as shown in the embodiment of figure 7. In such a case, the third abutment surface 425 of the tension element 14 is formed directly on the shoulder 418.

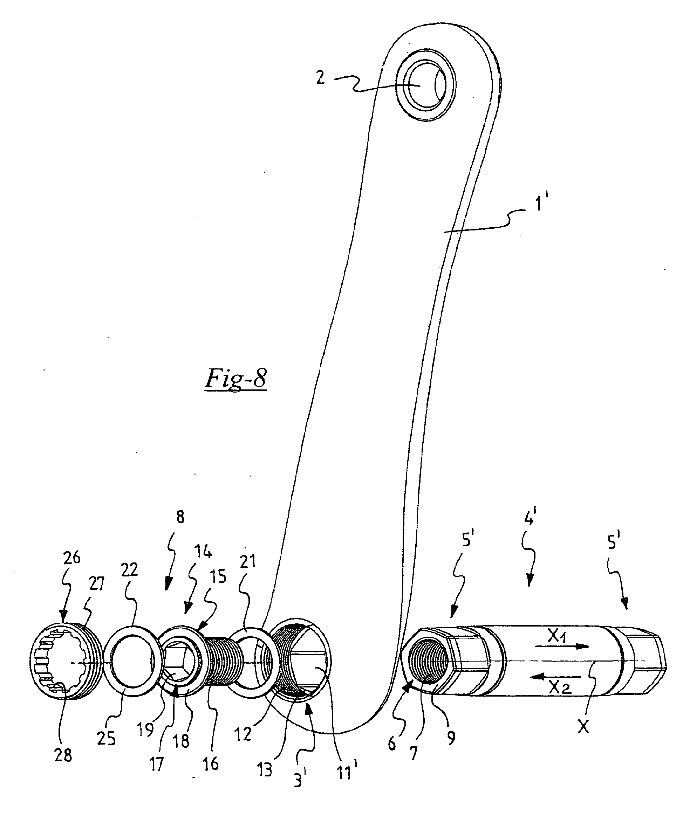

Figure 8 shows a pedal crank-central axle assembly that differs from the assembly of figure 1 only for the coupling profile: instead of a grooved profile, a simpler polygonal profile is provided, in particular a hexagonal profile. Consequently, the coupling portion 11' of the seat 3' of the pedal crank 1' has a hexagonal section, whereas otherwise the pedal crank 1' is the same as the pedal crank 1 of figure 1; correspondingly, the central axle 4' has coupling portions 5' with hexagonal section, whereas otherwise it is the same as the axle 4 of figure 1. All of the other elements of the pedal crank-central axle assembly shown in figure 8 are the same as the corresponding elements of the assembly of figure 1, and are identified by the same reference numerals; in particular, the attachment group 8 is the same as that of figure 1.

The coupling through polygonal profile is simpler and more cost-effective than that with a grooved profile, and it is therefore suitable for low-cost transmissions.

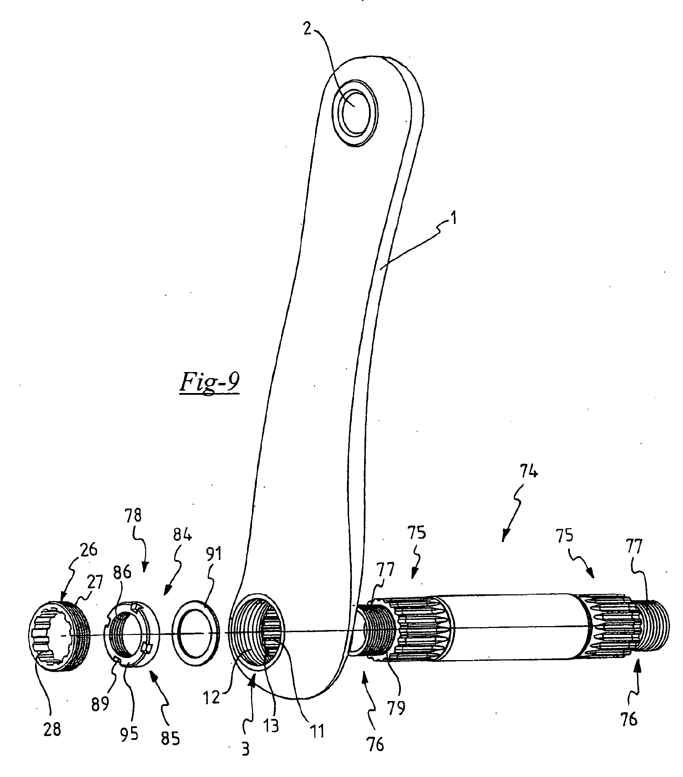

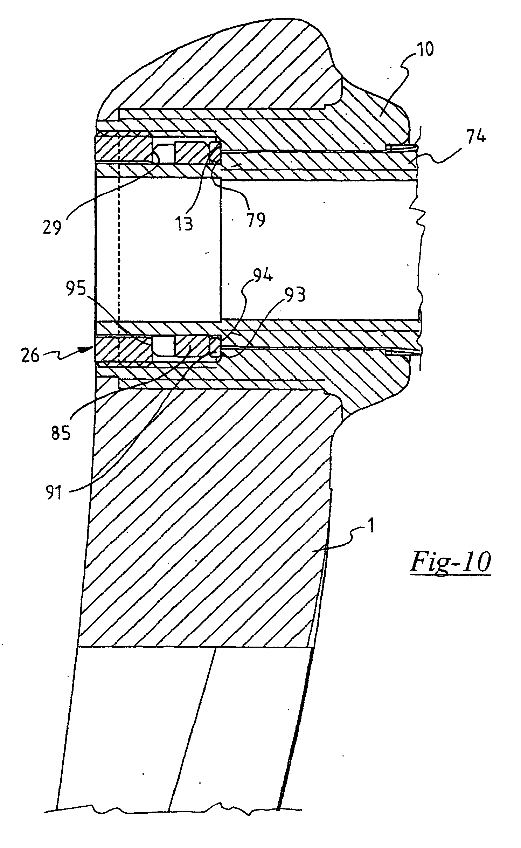

Figures 9 and 10 show a pedal crank 1 (the same as that of figure 1, and therefore numbered in the same way) and a central axle 74. The axle 74, close to its ends, comprises both two respective coupling portions 75 with the left pedal crank 1 and with the right pedal crank (the latter not shown), and two further portions formed from respective cylindrical shanks 76, projecting axially with respect to the portions 75 and provided with an external threading 77 for screwing engagement with an attachment group 78 of the pedal crank 1 to the central axle 74. At the outer end of the coupling portion 75 of the axle 74, between this and the shank 76 that has a smaller diameter, an annular abutment surface 79 of the axle 74 is formed, facing axially the second way X₂.

The coupling portion 75 of the axle 74 is shaped like the coupling portion 5 of the axle 4 of figure 1, so that the coupling with the coupling portion 11 of the pedal crank 1 is possible to transmit a twisting momentum between pedal crank and axle.

The attachment group 78 comprises a tension element 84, formed of a ring nut 85 with an internal threading 86 and a series of outer manoeuvring notches 89 for engagement with a drive tool (not shown).

The tension element 84 also comprises a first abutment washer 91, axially close to the ring nut 85 on the side of the first way X₁. On the first abutment washer 91, at the opposite side with respect to the ring nut 85, a first abutment surface 93 and a second abutment surface 94 are formed, coplanar and both facing axially the first way X₁. On the ring nut 85, at the opposite side with respect to the first abutment washer 91, a third abutment surface 95 is formed, facing axially the second way X₂; this third abutment surface 95 could alternatively be formed on a second abutment washer, in the same way as what is provided for the assembly of figure 1.

The attachment group 78 also comprises a clamping element, formed from a ring nut the same as the ring nut 26 of the assembly of figure 1 (and therefore identified by the same reference numeral 26) with an external threading 27 and an inner grooved manoeuvring profile 28. On the ring nut 26, at its end facing the first way X₁, an axial abutment surface 29 is formed.

Figures 9 and 10 show the conditions of the pedal crank 1 mounted on the axle 74.

In such circumstances, the external threading 77 of the coupling portion 75 of the central axle 74 is in screwing engagement with the internal threading 86 of the ring nut 85, just as the external threading 27 of the ring nut 26 is in screwing engagement in the threaded portion 12 of the receiving seat 3 of the pedal crank 1. Both the ring nut 85 and the ring nut 26 are arranged completely inside the second portion 12, as can be seen in figure 10. The first abutment surface 93 is in abutment engagement against the corresponding axial abutment surface 13 of the pedal crank 1; the second abutment surface 94 is in abutment engagement against the corresponding axial abutment surface 79 of the axle 74; the third abutment surface 95 is in abutment engagement against the corresponding abutment surface 29 of the ring nut 26.

The axle 74 is coupled in rotation with the pedal crank 1 through the mutual engagement of the coupling portion 75 of the axle 74 and the coupling portion 11 of the pedal crank 1. In such portions, between axle 74 and pedal crank 1 there is mechanical interference, however of a sufficiently limited magnitude to allow the abutment surface 79 of the axle 74 to rest in the axial direction against the second abutment surface 94 of the tension element 84, when the same tension element 84 is arranged axially with the first abutment surface 93 rested against the abutment surface 13 of the pedal crank 1.

Therefore, the mutual axial position of the pedal crank 1 and of the axle 74 is defined precisely by the position along the axis X of the abutment surface 79 of the axle 74 and of the abutment surface 13 of the pedal crank 1. More precisely, given that the two first and second abutment surfaces 93 and 94 of the tension element 84 are coplanar, the axle 74 is positioned axially with respect to the pedal crank 1 with the abutment surface 79 of the axle 74 coplanar to the abutment surface 13 of the pedal crank 1.

Also with the attachment group 78 it is possible to use first abutment washers analogous to the washers 121 and 221, with first and second abutment surfaces not coplanar to each other.

Also with the axle 74 with shanks 76 it is possible to provide that the coupling portion 75 be designed according to a polygonal profile analogous to the profile of the axle 4' of figure 8.

The embodiment of the invention shown in figures 9 and 10 can be preferable with respect to that of figures 1 to 5 since it requires the internal threading 86 on the ring nut 85 rather than the internal threading 7 in the portion 5 of the axle 4; indeed, considering that an internal threading is in any case necessary, either in the axle 4 or in the ring nut 85, it is often easier to make the internal threading 86 on the ring nut 85 than the threading 7 in the hole 6 inside the axle 4. Moreover, apart from threadings, the ring nut 85 is less complex than the screw 15, on which the shoulder 18 must be formed.

Of course, the different embodiments of the different elements of the invention can also be combined together in a different way to what has been indicated in the shown examples. For example, a configuration with tension element having a ring nut of the type of figures 9 and 10 can make use of a polygonal coupling profile, according to what is shown in figure 8.

## Claims

1. Attachment group (8; 78) of a pedal crank (1; 1') to the central axle (4; 4'; 74) of the bottom bracket of a bicycle transmission, in which the axle (4; 4'; 74) defines an axial direction along its own rotation axis (X) and on it a first way (X₁) towards the centre of the axle (4; 4'; 74) and a second way (X₂) opposite the first (X₁), comprising a tension element (14; 84) in screwing engagement with the axle (4; 4'; 74) and in axial resting engagement with the pedal crank (1; 1'), in which the tension element (14; 84) comprises a first axial abutment surface (23; 123; 223; 323; 93), facing the first way (X₁) in the axial direction (X), for resting against a corresponding axial abutment surface (13) of the pedal crank (1; 1'), facing the second way (X₂) in the axial direction (X), **characterised in that** the tension element (14; 84) comprises a second axial abutment surface (24; 124; 224; 324; 94), facing the first way (X₁) in the axial direction (X), for resting against a corresponding axial abutment surface (9; 79) of the axle (4; 4'; 74), facing the second way (X₂) in the axial direction (X), and a third axial abutment surface (25; 425; 95), facing the second way (X₂) in the axial direction (X), for resting against a clamping element (26) which is in screwing engagement with the pedal crank (1; 1').

2. Group according to claim 1, wherein the tension element (14) comprises a shoulder (18; 418) and a first abutment washer (21; 121; 221) mounted against the shoulder (18; 418), and wherein at least one of the first and second abutment surface (23, 24; 123, 124; 223, 224) of the tension element (14) is formed on the first abutment washer (21; 121; 221).

3. Group according to claim 1, wherein the tension element (14) comprises a shoulder (318) wherein at least one of the first and second abutment surface (323, 324) of the tension element (14) is formed on said shoulder (318).

4. Group according to claim 1, wherein the first and second abutment surface (23, 24; 323, 324) are coplanar.

5. Group according to claim 1, wherein the first abutment surface (223) is closer to the centre of the axle (4; 4'; 74) than the second abutment surface (224).

6. Group according to claim 1, wherein the first abutment surface (123) is further from the centre of the axle (4; 4'; 74) than the second abutment surface (124).

7. Group according to claim 2, comprising a series of interchangeable first abutment washers (21; 121; 221), having different thickness and/or shape.

8. Group according to claim 1, wherein the third abutment surface (95) is formed at the axial end of the tension element (84), facing the second way (X₂).

9. Group according to claim 1, wherein the tension element (14) comprises a shoulder (18; 318) and a second abutment washer (22) mounted against the shoulder (18; 318), and wherein the third abutment surface (25) is formed on the second abutment washer (22).

10. Group according to claim 9, wherein the second abutment washer (22) is made with a high-friction material.

11. Group according to claim 1, wherein the tension element (14) comprises a shoulder (418) wherein the third abutment surface (425) is formed on said shoulder (418).

12. Group according to claim 1, wherein the tension element (14) is a screw (15) with external threading (16), in screwing engagement in a corresponding internal threading (7) of the axle (4; 4').

13. Group according to claim 1, wherein the tension element (84) is a ring nut (85) with internal threading (86), in screwing engagement on a corresponding external threading (77) of the axle (74).

14. Group according to claim 1, wherein the clamping element comprises a ring nut (26), having an external threading (27) in screwing engagement in a corresponding threaded portion (12) of a receiving seat (3) of the axle (4; 4'; 74) formed in the pedal crank (1; 1'), and an axial abutment surface (28) facing in the first way (X₁), in resting engagement against the third axial abutment surface (25; 95) of the tension element (14; 84).

15. Pedal crank for mounting onto a central axle (4; 4'; 74) of the bottom bracket of a bicycle transmission by means of an attachment group (8; 78) according to any one of claims 1 to 14, wherein the pedal crank (1; 1') is provided with a receiving seat (3; 3') having a first portion (11, 11') and a second portion (12), the first portion (11, 11') being shaped according to a rotation coupling profile with the axle (4; 4'; 74), the second portion (12) being provided with an internal threading wherein the clamping element (26) of the attachment group (8; 78) is in screwing engagement, and wherein the abutment surface (13) of the pedal crank (1; 1') is formed in the receiving seat (3; 3') at a width variation between the two first and second portions (11; 11'; 12) of the receiving seat (3; 3').

16. Pedal crank according to claim 15, wherein at least the zone in which the receiving seat (3; 3') is formed is made from aluminium alloy.

17. Central axle of the bottom bracket of a bicycle transmission intended for the assembly of at least one pedal crank (1; 1'), by means of an attachment group (8) according to claim 12, wherein the abutment surface (9) of the axle (4; 4') is formed at an axial end of the axle (4; 4').

18. Central axle of the bottom bracket of a bicycle transmission intended for the assembly of at least one pedal crank (1), by means of an attachment group (78) according to claim 13, wherein the axle (74) comprises, close to at least one of its two ends, a first inner portion (75) and a second outer portion (76), the first portion (75) being shaped according to a rotation coupling profile with the pedal crank (1), the second portion (76) being provided with an external threading (77) in which the tension element (84) of the attachment group (78) is in screwing engagement, and in which the abutment surface (79) of the axle (74) is formed at a width variation between the two first and second portions (75, 76) of the axle (74).

19. Axle according to any one of claims 17 to 18, made from steel.
